Europäisches Patentamt

European Patent Office

Office européen des brevets

(19)

(11) Veröffentlichungsnummer: **0 287 505**
**A1**

(12) **EUROPÄISCHE PATENTANMELDUNG**

(21) Anmeldenummer: 88810137.5

(51) Int. Cl.⁴: **F 16 B 13/14**

(22) Anmeldetag: 07.03.88

(30) Priorität: 13.04.87 DE 3712463

(43) Veröffentlichungstag der Anmeldung:
19.10.88 Patentblatt 88/42

(84) Benannte Vertragsstaaten:
AT BE CH DE ES FR GB IT LI NL SE

(71) Anmelder: HILTI Aktiengesellschaft
FL-9494 Schaan (LI)

(72) Erfinder: **Bisping, Heinz**
**Feichtmayrstrasse 15**
**D-8000 München 50 (DE)**

**Gahler, Alfred**
**33 Schwedensteinstrasse**
**D-8000 Muenchen (DE)**

**Hoffmann, Armin**
**Luitpoldstrasse 13**
**D-8034 Germering (DE)**

**Popp, Franz**
**Kennedy-Strasse 2**
**D-8039 Puchheim (DE)**

(74) Vertreter: **Wildi, Roland**
**Hilti Aktiengesellschaft Patentabteilung**
**FL-9494 Schaan (LI)**

(54) Befestigung auf Hohlräume aufweisendem Untergrund.

(57) Das aus einer Siebhülse (1) und einer darin einsetzbaren Einsatzhülse (2) bestehende Verankerungsteil wird mittels aushärtender Masse (4) im Untergrundmaterial (3) verankert. Die aushärtende Masse (4) wird dabei in die Siebhülse (1) eingebracht und beim Einführen der Einsatzhülse (2) durch die Durchtrittsöffnungen (1g) der Siebhülse in die Hohlräume des Untergrundmaterials (3) verdrängt. Für das Zustandekommen eines Formschlusses mit der aushärtenden Masse sind die Siebhülse (1) und die Einsatzhülse (2) an ihrer Aussen- und Innenseite mit einer Profilierung versehen, wobei die Profilierung ausserdem zu einer verbesserten Verteilung der aushärtenden Masse (4) beim Einführen der Einsatzhülse (2) in die Siebhülse (1) führt. Sowohl die Siebhülse (1) als auch die Einsatzhülse (2) bestehen vorzugsweise aus Kunststoff.

Fig. 3

EP 0 287 505 A1

# Beschreibung

## Befestigung auf Hohlräume aufweisendem Untergrund

Die Erfindung betrifft ein Verankerungsteil für die Verankerung von Befestigungselementen in Hohlräume aufweisenden Untergrundmaterialien mittels aushärtender Massen, mit einer Durchtrittsöffnungen für die aushärtende Masse aufweisenden Siebhülse und einer darin einsetzbaren, an ihrem der Setzrichtung abgewandten Ende mit einer Aufnahmeöffnung für das Befestigungselement versehenen Einsatzhülse.

Mittels aushärtender Massen in Hohlmauerwerk und dergleichen Untergrundmaterialien verankerbare, aus Siebhülse und Einsatzhülse bestehende Verankerungsteile sind beispielsweise aus dem Prospekt "Anwendungen und Produkte 1985" der Deutschen HILTI GmbH bekannt. Dabei dient die aus Drahtgewebe bestehende Siebhülse der Verteilung der aushärtendem Masse in die umliegenden Hohlräume des Untergrundmaterials, während die Einsatzhülse eine lösbare, mit der aushärtenden Masse nicht in direktem Kontakt stehende Verbindung mit dem Befestigungselement schafft. Die Uebertragung der Haltekraft kommt bei diesem Verankerungsteil überwiegend durch eine formschlüssige Verbindung über die aushärtende Masse zustande.

Der Erfindung liegt die Aufgabe zugrunde, ein Verankerungsteil der genannten Art derart zu verbessern, dass dank verbessertem Formschluss zwischen Einsatzhülse und Siebhülse einerseits, sowie Siebhülse und Untergrundmaterial andererseits unter Einschluss der aushärtenden Masse erhöhte Verankerungswerte erzielt werden.

Erfindungsgemäss wird die Aufgabe dadurch gelöst, dass die Siebhülse und die Einsatzhülse an ihrer Aussen- und Innenseite eine Profilierung aufweisen.

Durch diese Profilierung der Siebhülse und der Einsatzhülse wird deren Oberfläche vergrössert und dadurch ein besserer Formschluss mit der aushärtenden Masse erreicht. Dadurch liegen die Verankerungswerte höher als bei vergleichbaren Verankerungsteilen der genannten Art.

Die Profilierung auf der Aussenseite der Siebhülse ist zweckmässigerweise als umlaufende Rippen ausgebildet. Umlaufende Rippen ergeben eine gute Führung und Abstützung der zwischen den Rippen durch die Durchtrittsöffnungen austretenden Stränge an aushärtender Masse über den gesamten Umfang der Siebhülse. Dadurch ist auch eine gute und gleichmässige Krafteinleitung auf das Untergrundmaterial gewährleistet.

Die Profilierung auf der Innenseite der Siebhülse ist vorteilhaft als in Achsrichtung verlaufende Stege ausgebildet. In Achsrichtung verlaufende Stege ermöglichen eine gleichmässige Verteilung der Masse über die gesamte Länge der Siebhülse. Beim Einführen der Einsatzhülse in die Siebhülse kann die aushärtende Masse zwischen den in Achsrichtung verlaufenden Stegen nach hinten in den rückwärtigen Bereich der Siebhülse verdrängt werden und durch die Durchtrittsöffnungen in diesem Bereich in die umliegenden Hohlräume des Untergrundmaterials gelangen.

Die Profilierung auf der Aussenseite der Einsatzhülse ist zweckmässigerweise als umlaufende Ringwulste ausgebildet. Umlaufende Ringwulste ergeben eine hohe Formbeständigkeit und schaffen ausserdem einen guten Formschluss mit der aushärtenden Masse. Durch ein geeignetes, beispielsweise gerundetes Profil der Ringwulste ist eine gleichmässige Benetzung der gesamten Oberfläche der Einsatzhülse mit der aushärtenden Masse gewährleistet. Dadurch kann neben dem Formschluss auch eine adhäsive Verbindung zwischen der Einsatzhülse und der aushärtenden Masse zustande kommen.

Die Profilierung auf der Aussenseite der Einsatzhülse ist vorteilhaft als Gewindegänge ausgebildet. Eine als Gewindegänge ausgebildete Profilierung ermöglicht eine gleichmässige Verteilung der aushärtenden Masse entlang der Einsatzhülse. Da die aushärtende Masse beim Einführen der Einsatzhülse durch die Zwischenräume zwischen den einzelnen Gewindegängen nach hinten verdrängt wird, erfolgt auch eine gleichmässige Verteilung der aushärtenden Masse über den Umfang.

Die Profilierung auf der Innenseite der Einsatzhülse ist zweckmässigerweise als radial nach innen ragende, in Achsrichtung verlaufende Leisten ausgebildet. Die als Leisten ausgebildeten Profilierungen sind vorzugsweise elastisch oder plastisch verformbar und ermöglichen die Aufnahme unterschiedlich grosser Befestigungselemente. Beispielsweise kann dieselbe Einsatzhülse zur Aufnahme von Holzschrauben von 5 bis 6 mm Schaftdurchmesser verwendet werden.

Die Einsatzhülse weist vorteilhafterweise auf ihrer Aussenseite in axialer Richtung verlaufende, die Profilierungen unterbrechende Ausnehmungen auf. Durch das Anbringen solcher Ausnehmungen kann beim Einführen der Einsatzhülse die aushärtende Masse entlang den Ausnehmungen nach hinten fliessen und somit die gesamte Oberfläche der Einsatzhülse benetzen. Die Ausnehmungen ergeben ausserdem eine Verdrehsicherung der Einsatzhülse in der aushärtenden Masse.

Für eine wirtschaftliche Herstellung des Verankerungsteils ist es zweckmässig, dass die Siebhülse und die Einsatzhülse aus Kunststoff bestehen. Bei Verwendung geeigneter Kunststoffe, welche durch die aushärtende Masse an der Oberfläche angelöst werden, kommt ausserdem eine Kaltverschweissung zustande. Eine solche Verschweissung ergibt erhöhte Auszugs-werte und verhindert ein Mitdrehen der Einsatzhülse beim Eindrehen einer Schraube.

Die Erfindung soll nachstehend anhand der sie beispielsweise wiedergebenden Zeichnung näher erläutert werden. Es zeigen:

Fig. 1 eine erfindungsgemässe Siebhülse, teilweise im Schnitt dargestellt,

Fig. 2 eine stirnseitige Ansicht der Siebhülse gemäss Fig. 1, entsprechend dem Pfeil II,

Fig. 3 eine Einsatzhülse zum Einführen in die in Fig. 1 dargestellte Siebhülse, teilweise im Schnitt dargestellt,

Fig. 4 eine stirnseitige Ansicht der Einsatzhülse gemäss Fig. 3, entsprechend dem Pfeil IV,

Fig. 5 eine fertige Verankerung mit einer Siebhülse und einer Einsatzhülse gemäss Fig. 1 bis 4.

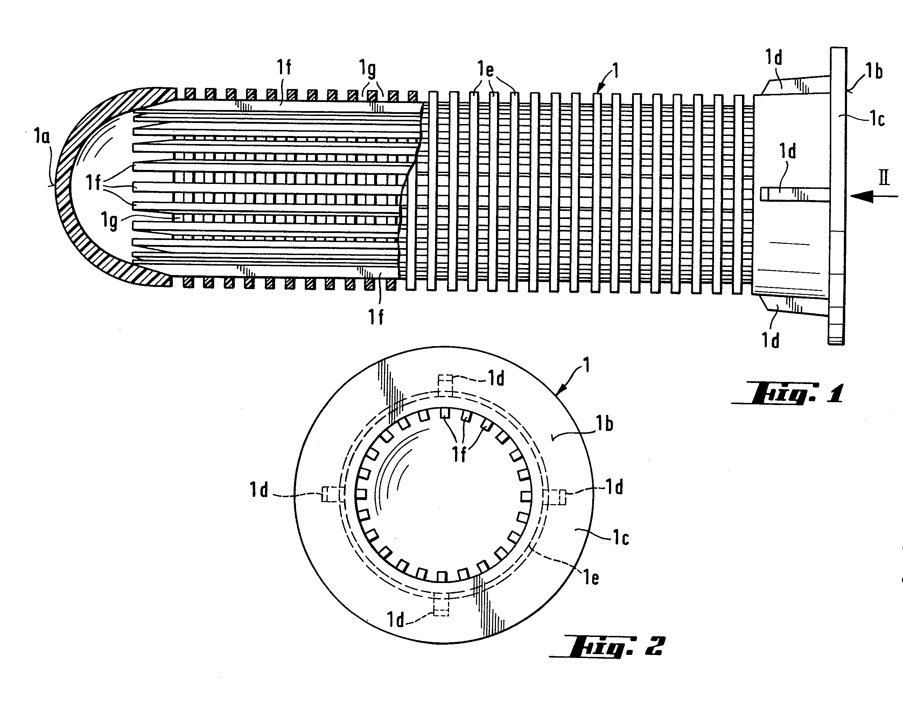

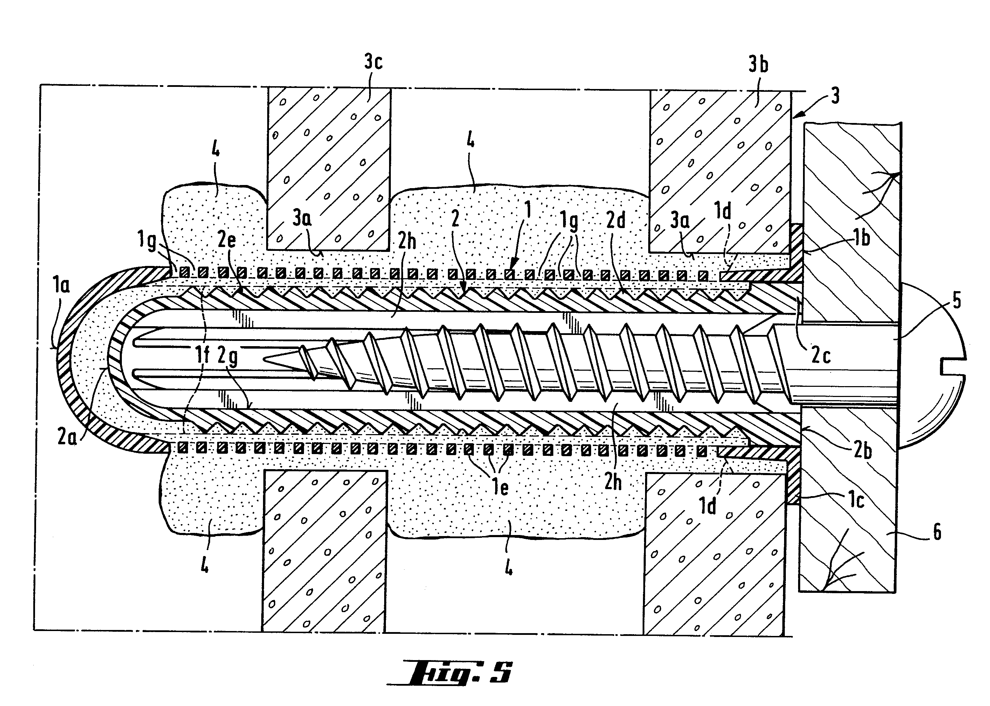

Die aus Fig. 1, 2 und 5 ersichtliche, insgesamt mit 1 bezeichnete Siebhülse weist ein in Setzrichtung vorderes Ende 1a und ein rückwärtiges Ende 1b auf. Das rückwärtige Ende 1b der Siebhülse 1 ist mit einem Flansch 1c versehen. Das vordere Ende 1a der Siebhülse 1 ist konvex gerundet ausgebildet. Diese Ausbildung erleichtert das Einführen der Siebhülse 1 in ein Bohrloch und ergibt ausserdem eine gute Verteilung der aushärtenden Masse. Auf der Aussenseite weist die Siebhülse 1 eine als umlaufende Rippen 1e ausgebildete Profilierung auf. Zwischen den Rippen 1e werden durch die Rippen 1e voneinander getrennte Ringkanäle gebildet. Wie insbesondere Fig. 2 zeigt, weist die Siebhülse 1 auf ihrer Innenseite ebenfalls eine Profilierung auf, welche als in Achsrichtung verlaufende Stege 1f ausgebildet ist. Zwischen den Stegen 1f und den Rippen 1e werden Durchtrittsöffnungen 1g für die aushärtende Masse gebildet. Der Flansch 1c wird durch Flossen 1d verstärkt.

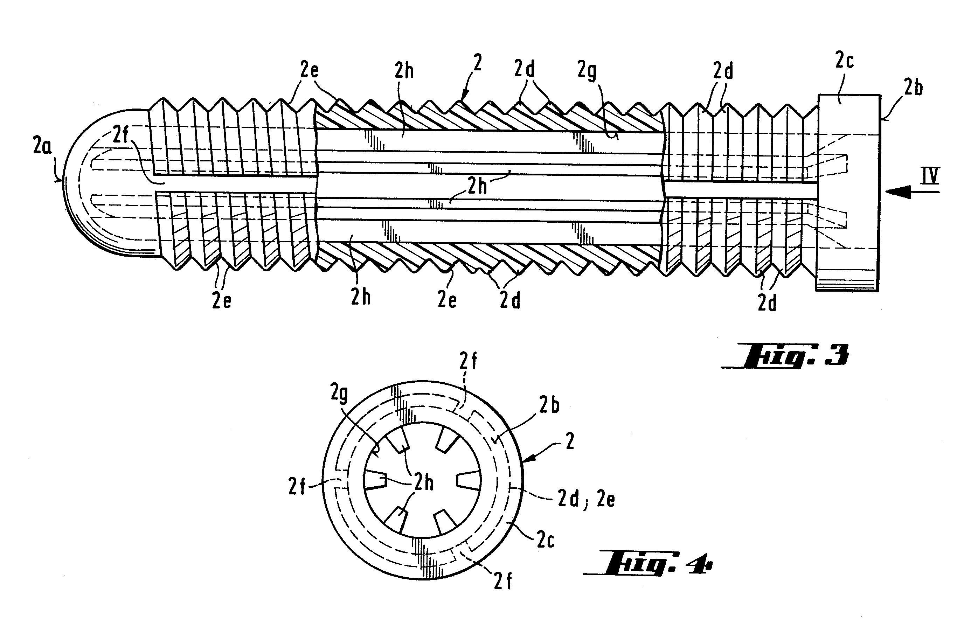

Die aus Fig. 3, 4 und 5 ersichtliche, insgesamt mit 2 bezeichnete Einsatzhülse weist ein in Einführrichtung vorderes Ende 2a und ein rückwärtiges Ende 2b auf. Das vordere Ende 2a der Einsatzhülse 2 ist verschlossen und halbkugelförmig ausgebildet. Im rückwärtigen Endbereich der Einsatzhülse 2 ist ein Bund 2c angeordnet. Der an den Bund 2c angrenzende, vordere Teil der Einsatzhülse 2 weist an seiner Aussenseite eine als umlaufende Ringwulste 2d sowie daran anschliessend als Gewindegänge 2e ausgebildete Profilierung auf. Die Ringwulste 2d sowie die Gewindegänge 2e werden durch in axialer Richtung verlaufende, als Nuten ausgebildete Ausnehmungen 2f unterbrochen. Die Ausnehmungen 2f dienen beim Einführen der Einsatzhülse 2 in die mit aushärtender Masse verfüllte Siebhülse 1 dem Massenausgleich, indem aushärtende Masse entlang den Ausnehmungen 2f in den hinteren Bereich der Siebhülse 1 verdrängt werden kann. Die Einsatzhülse 2 weist eine vom rückwärtigen Ende 2b ausgehende Aufnahmeöffnung 2g für ein Befestigungselement auf. An der Innenseite der Einsatzhülse sind als radial nach innen ragende, als in Achsrichtung verlaufende Leisten 2h ausgebildete Profilierungen angeordnet. Die Leisten 2h sind verformbar und dienen der Anpassung an unterschiedliche Durchmesser der aufzunehmenden Befestigungselemente.

Beim Setzvorgang wird zunächst die Siebhülse 1 in ein Bohrloch 3a eines insgesamt mit 3 bezeichneten Untergrundmaterials eingesetzt. Anschliessend wird aushärtende Masse 4 in die Siebhülse 1 eingebracht und gelangt durch die Durchtrittsöffnungen 1g der Siebhülse 1 in die Hohlräume zwischen der Aussenwand 3b und der Zwischenwand 3c bzw hinter der Zwischenwand 3c des Untergrundmaterials 3. Anschliessend wird die Einsatzhülse 2 in die Siebhülse 1 eingeführt. Dabei wird der in der Siebhülse verbleibende Teil der aushärtenden Masse 4 ebenfalls aus der Siebhülse 1 verdrängt. Die aushärtende Masse 4 ergibt einen Formschluss mit dem Untergrundmaterial 3. Nach dem Aushärten der Masse 4 wird ein dem jeweils zu befestigenden Bauteil 6 entsprechend angepasstes, als Schraube 5 ausgebildetes Befestigungselement in die Einsatzhülse 2 eingeschraubt. Die Befestigung ist somit jederzeit und problemlos wieder lösbar.

Sowohl die Siebhülse 1 als auch die Einsatzhülse 2 bestehen vorzugsweise aus Kunststoff. Dies ermöglicht eine einfache und wirtschaftliche Herstellung der beiden Teile. Durch die Wahl geeigneter Kunststoffe kann erreicht werden, dass die Siebhülse 1 und die Einsatzhülse 2 durch die aushärtende Masse 4 oberflächlich angelöst werden und somit ein Kaltverschweissung zwischen der aushärtenden Masse 4 und der Siebhülse 1 sowie der Einsatzhülse 2 zustande kommt. Dies ergibt eine zusätzliche Erhöhung des Verankerungswertes.

Da der Bedarf an aushärtender Masse 4 pro Befestigung gering ist, kann das System auch dort wirtschaftlich angewendet werden wo bisher teure und zeitaufwendige Spezialdübel und Verfahren notwendig waren. Die Verteilung der Last auf eine grosse Fläche verhindert bei spröden Untergründen Ausbrüche des Untergrundmaterials.

## Patentansprüche

1. Verankerungsteil für die Verankerung von Befestigungselementen in Hohlräume aufweisenden Untergrundmaterialien mittels aushärtender Massen, mit einer Durchtrittsöffnungen für die aushärtende Masse aufweisenden Siebhülse und einer darin einsetzbaren, an ihrem der Setzrichtung abgewandten Ende mit einer Aufnahmeöffnung für das Befestigungselement versehenen Einsatzhülse, **dadurch gekennzeichnet**, dass die Siebhülse (1) und die Einsatzhülse (2) an ihrer Aussen-und Innenseite eine Profilierung aufweisen.

2. Verankerungsteil nach Anspruch 1, dadurch gekennzeichnet, dass die Profilierung auf der Aussenseite der Siebhülse (2) als umlaufende Rippen (1e) ausgebildet ist.

3. Verankerungsteil nach Anspruch 1, dadurch gekennzeichnet, dass die Profilierung auf der Innenseite der Siebhülse (1) als in Achsrichtung verlaufende Stege (1f) ausgebildet ist.

4. Verankerungsteil nach einem der Ansprüche 1 bis 3, dadurch gekennzeichnet, dass die Profilierung auf der Aussenseite der Einsatzhülse (2) als umlaufende Ringwulste (2d) ausgebildet ist.

5. Verankerungsteil nach einem der Ansprüche 1 bis 3, dadurch gekennzeiche, dass die Profilierung auf der Aussenseite der Einsatzhülse (2) als Gewindegänge (2e) ausgebildet ist.

6. Verankerungsteil nach einem der Ansprüche 1 bis 5, dadurch gekennzeichnet, dass die Profilierung auf der Innenseite der Einsatzhülse (2) als radial nach innen ragende, in Achsrichtung verlaufende Leisten (2h) ausgebildet ist.

7. Verankerungsteil nach einem der Ansprüche 1 bis 6, dadurch gekennzeichnet, dass die Einsatzhülse (2) auf ihrer Aussenseite in axialer Richtung verlaufende, die Profilierungen unterbrechende Ausnehmungen (2f) aufweist.

8. Verankerungsteil nach einem der Ansprüche 1 bis 7, dadurch gekennzeichnet, dass die Siebhülse (1) und die Einsatzhülse (2) aus Kunststoff bestehen.

Fig. 1

Fig. 2

*Fig. 3*

*Fig. 4*

0287505

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 613 998 (UPAT GMBH & CO.) <br> * Figuren; Ansprüche * <br> --- | 1-8 | F 16 B 13/14 |
| A | DE-A-3 225 051 (HILTI AG) <br> * Figur 2; Ansprüche * <br> --- | 1 | |
| A | EP-A-0 005 969 (FOSROC INTERNATIONAL LTD.) <br> ----- | | |

RECHERCHIERTE SACHGEBIETE (Int. Cl.4)

F 16 B 13/00
E 21 D 21/00

Der vorliegende Recherchenbericht wurde für alle Patentansprüche erstellt

| Recherchenort | Abschlußdatum der Recherche | Prüfer |
|---|---|---|
| BERLIN | 09-06-1988 | SCHAEFFLER C.A.A. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
   Dokument

EPO FORM 1503 03.82 (P0403)